# EUROPEAN PATENT APPLICATION

(11) **EP 4 510 556 A1**
(43) Date of publication of application: **19.02.2025**
(21) Application number: 23845135.5
(22) Date of filing: 16.06.2023
(51) Int. Cl.: H04N 7/14

(54) **VIDEO CALL METHOD, ELECTRONIC DEVICE, AND STORAGE MEDIUM**

(30) Priority: 26.07.2022 CN 202210885480
(71) Applicant: ZTE Corporation, Shenzhen, Guangdong 518057 (CN)
(72) Inventor: YANG, Haicheng, Shenzhen, Guangdong 518057 (CN); ZHOU, Jinxing, Shenzhen, Guangdong 518057 (CN)
(74) Representative: Carangelo, Pierluigi
(86) International application number: PCT/CN2023/100796
(87) International publication number: WO 2024/021922

(57) **Abstract**

The present application provides a video call method, an electronic device, and a storage medium. The method comprises: receiving face authentication request information from a second terminal on the basis of a preset data channel (S110); acquiring face image information in response to the face authentication request information (S120); performing privacy protection processing on the face image information to obtain encrypted information or authentication information (S130); and sending the encrypted information or the authentication information to the second terminal on the basis of the data channel, such that the second terminal determines a face authentication result of a first terminal according to the encrypted information or the authentication information (S140).

## Description

### CROSS-REFERENCE TO RELATED APPLICATION

This application is filed on the basis of Chinese patent application No. 202210885480.9 filed July 26, 2022, and claims priority to the Chinese patent application, the entire contents of which are incorporated herein by reference.

### TECHNICAL FIELD

The present disclosure relates to, but not limited to, the technical field of communication, and in particular, to a video call method, an electronic device, and a storage medium.

### BACKGROUND

At present, in the business scenario of 5G video customer service, when a user's face needs to be authenticated during a video call, generally a terminal device on the customer service side acquires the face image information of the user by automatic screenshot capturing, and sends the face image information to a public security information system for authentication. However, the face image information of the user is at risk of leakage and the security is unsatisfactory.

### SUMMARY

The following is a summary of the subject matter set forth in this description. This summary is not intended to limit the scope of protection of the claims.

Embodiments of the present disclosure provide a video call method, an electronic device, and a storage medium.

In accordance with a first aspect of the present disclosure, an embodiment provides a video call method, applied to a first terminal device, the method including: establishing, by the first terminal device, a video call with a second terminal device; receiving face authentication request information from the second terminal device based on a preset data channel; acquiring face image information in response to the face authentication request information; performing privacy protection processing on the face image information to obtain encrypted information or authentication information; and sending the encrypted information or the authentication information to the second terminal device based on the preset data channel, such that the second terminal device determines a face authentication result of the first terminal device according to the encrypted information or the authentication information.

In accordance with a second aspect of the present disclosure, an embodiment provides a video call method, applied to a second terminal device, the method including: acquiring face authentication request information; sending the face authentication request information to a first terminal device based on a preset data channel; receiving encrypted information or authentication information from the first terminal device based on the preset data channel, where the encrypted information or the authentication information is obtained by the first terminal device by performing privacy protection processing on face image information, and the face image information is acquired by the first terminal device in response to the face authentication request information; and determining a face authentication result of the first terminal device according to the encrypted information or the authentication information.

In accordance with a third aspect of the present disclosure, an embodiment provides an electronic device, including: a memory, a processor, and a computer program stored in the memory and executable by the processor, where the computer program, when executed by the processor, causes the processor to implement the video call method in accordance with the first aspect.

In accordance with a fourth aspect of the present disclosure, an embodiment provides a computer-readable storage medium, storing a computer-executable program which, when executed by a computer, causes the computer to implement the video call method in accordance with the first aspect or the video call method in accordance with the second aspect.

Additional features and advantages of the present disclosure will be set forth in the description which follows, and in part will be obvious from the description, or may be learned by the practice of the present disclosure. The objects and other advantages of the present disclosure can be realized and obtained by the structures particularly pointed out in the description, claims and drawings.

### BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, but are not intended to limit the technical schemes of the present disclosure.
FIG. 1 is a flowchart of a video call method applied to a first terminal device according to an embodiment of the present disclosure;
FIG. 2 is a flowchart of another video call method according to another embodiment of the present disclosure;
FIG. 3 is a flowchart of a method of authentication processing according to another embodiment of the present disclosure;
FIG. 4 is a flowchart of a method of establishing a data channel according to another embodiment of the present disclosure;
FIG. 5 is a flowchart of a method of sending anonymized video information according to another embodiment of the present disclosure;
FIG. 6 is a flowchart of a method of determining a face region according to another embodiment of the present disclosure;
FIG. 7 is a flowchart of another method of determining a face region according to another embodiment of the present disclosure;
FIG. 8 is a flowchart of a method of anonymizing according to another embodiment of the present disclosure;
FIG. 9 is a flowchart of a video call method applied to a second terminal device according to another embodiment of the present disclosure;
FIG. 10 is a schematic diagram of an Internet Protocol Multimedia Subsystem (IMS) data channel according to another embodiment of the present disclosure;
FIG. 11 is a flowchart of a method of sending video information according to an embodiment of the present disclosure; and
FIG. 12 is a structural diagram of an electronic device according to another embodiment of the present disclosure.

### DETAILED DESCRIPTION

To make the objectives, technical schemes, and advantages of the present disclosure clear, the present disclosure is described in further detail in conjunction with accompanying drawings and embodiments. It should be understood that the embodiments described herein are merely used for illustrating the present disclosure, and are not intended to limit the present disclosure.

It should be noted that although the functional modules have been divided in the schematic diagram of the apparatus and logical orders have been shown in the flowchart, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

At present, in the business scenario of 5G video customer service, when a user' face needs to be authenticated during a video call, generally a terminal device on the customer service side acquires the face image information of the user by automatic screenshot capturing, and sends the face image information to a public security information system for authentication. However, the face image information of the user is at risk of leakage and the security is unsatisfactory.

To solve the problem that there is a risk of leakage of face image information of a user when face authentication is performed during a video call, the present disclosure provides a video call method, an electronic device, and a storage medium. The method is applied to a first terminal device and includes: establishing, by the first terminal device, a video call with a second terminal device; receiving face authentication request information from the second terminal device based on a preset data channel; acquiring face image information in response to the face authentication request information; performing privacy protection processing on the face image information to obtain encrypted information or authentication information; and sending the encrypted information or the authentication information to the second terminal device based on the preset data channel, such that the second terminal device determines a face authentication result of the first terminal device according to the encrypted information or the authentication information. According to the scheme provided by the embodiments of the present disclosure, the first terminal device receives face authentication request information from the second terminal device through the data channel, then performs privacy protection processing on the face image information to obtain encrypted information or authentication information, and sends the encrypted information or the authentication information to the second terminal device through the data channel, for the second terminal device to determine a face authentication result of the first terminal device according to the encrypted information or the authentication information. In this way, leakage of face image information of the user can be avoided, thereby improving the security.

The embodiments of the present disclosure will be described in detail below in conjunction with the accompanying drawings.

The video call method provided in the embodiments of the present disclosure may be applied to a first terminal device or a second terminal device, or may be software run in a first terminal device or a second terminal device.

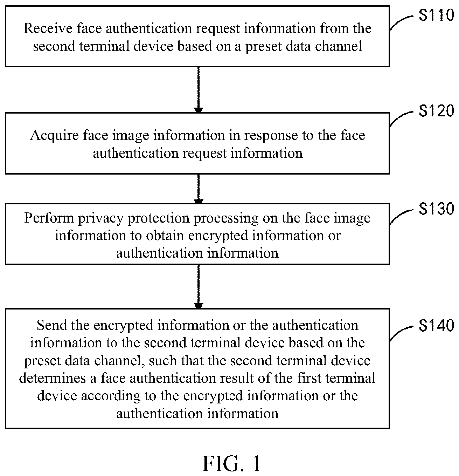

FIG. 1 is a flowchart of a video call method according to an embodiment of the present disclosure. The video call method may be applied to a first terminal device. The video call method includes, but not limited to, the following steps S110 to S140.

At S110, face authentication request information from a second terminal device is received based on a preset data channel.

At S120, face image information is acquired in response to the face authentication request information.

At S130, privacy protection processing is performed on the face image information to obtain encrypted information or authentication information.

At S140, the encrypted information or the authentication information is sent to the second terminal device based on the preset data channel, such that the second terminal device determines a face authentication result of the first terminal device according to the encrypted information or the authentication information.

It can be understood that after a video call is established between the first terminal device and the second terminal device, the first terminal device needs to listen for face authentication request information, and when receiving the face authentication request information, acquire face image information using a preset image capturing device. Then, the first terminal device performs privacy protection processing on the face image information, and sends a result of the privacy protection processing to the second terminal device. As such, the second terminal device cannot obtain the original face image information, so the privacy security of the user can be protected. In addition, the information transmission during the face authentication process is implemented through a dedicated data channel already established between the first terminal device and the second terminal device, so the reliability and stability of the information transmission can be ensured. Based on this, the first terminal device receives face authentication request information from the second terminal device through the data channel, then performs privacy protection processing on the face image information to obtain encrypted information or authentication information, and sends the encrypted information or the authentication information to the second terminal device through the data channel, for the second terminal device to determine a face authentication result of the first terminal device according to the encrypted information or the authentication information. In this way, leakage of face image information of the user can be avoided, thereby improving the security.

It should be noted that the first terminal device and the second terminal device may each be, but not limited to, a Personal Computer (PC), a mobile phone, a smartphone, a Personal Digital Assistant (PDA), a wearable device, a Pocket PC (PPC), a tablet computer, etc. The image capturing device may be, but not limited to, a monocular camera, a binocular camera, etc.

In practice, in the business scenario of 5G video customer service, the first terminal device is equivalent to a terminal device on the user side, and the second terminal device is equivalent to a terminal device on the customer service side. At present, to protect the privacy and security of users, by default, after a video call is established between the first terminal device and the second terminal device, a user of the first terminal device does not need to turn on the camera, but only needs to watch the video service content from the second terminal device. In a face authentication scenario, the user agrees to turn on the camera of the first terminal device, and turns his or her face toward the camera, such that the first terminal device directly sends face image information to the second terminal device for face authentication. There is a risk of leakage of the face image information of the user. Once leaked, the facial image information may be abused for visual access control, posing a threat to the user's personal safety. In the video call method provided in this embodiment, the first terminal device performs privacy protection processing on the face image information acquired by the camera, and sends the processing result to the second terminal device. The second terminal device cannot obtain the original face image information, and can only determine the face authentication result of the first terminal device according to the processing result. In this way, leakage of the face image information of the user can be avoided, thereby improving the privacy security of the 5G video customer service, and improving the competitiveness of 5G terminal devices.

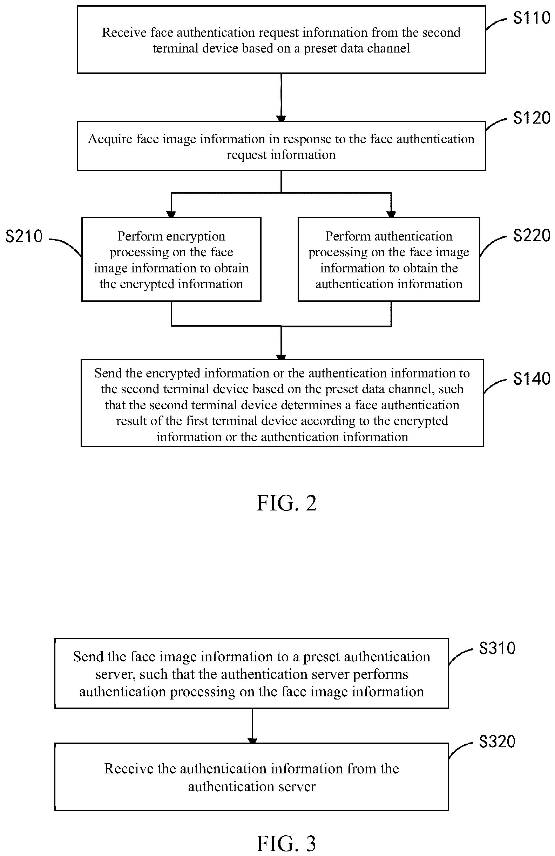

In addition, referring to FIG. 2, in an embodiment, S130 of FIG. 1 includes, but not limited to, a following step S210 or S220.

At S210, encryption processing is performed on the face image information to obtain the encrypted information.

At S220, authentication processing is performed on the face image information to obtain the authentication information.

It can be understood that during the privacy protection processing, the first terminal device may encrypt the face image information according to a preset encryption rule to obtain the encrypted information, and then send the encrypted information to the second terminal device, and the second terminal device may match the encrypted information against a preset first authentication database, and determine a face authentication result. When the encrypted information matches any information in the first authentication database, the face authentication result is successful, or otherwise, the face authentication result is not successful. Alternatively, the first terminal device may perform authentication processing on the face image information according to a preset second authentication database to obtain authentication information for indicating a face authentication result. When the face image information matches any information in the second authentication database, the face authentication result is successful, or otherwise, the face authentication result is not successful.

In addition, referring to FIG. 3, in an embodiment, S220 of FIG. 2 includes, but not limited to, the following steps S310 to S320.

At S310, the face image information is sent to a preset authentication server, such that the authentication server performs authentication processing on the face image information.

At S320, the authentication information is received from the authentication server.

It can be understood that the first terminal device may send the face image information to an authentication server. The authentication server is equivalent to a public security information system, and stores public security information including face information. The first terminal device compares the face image information with the public security information in the authentication server, and obtains authentication information for indicating a face authentication result. When the face image information matches any public security information in the authentication server, the face authentication result is successful, or otherwise, the face authentication result is not successful.

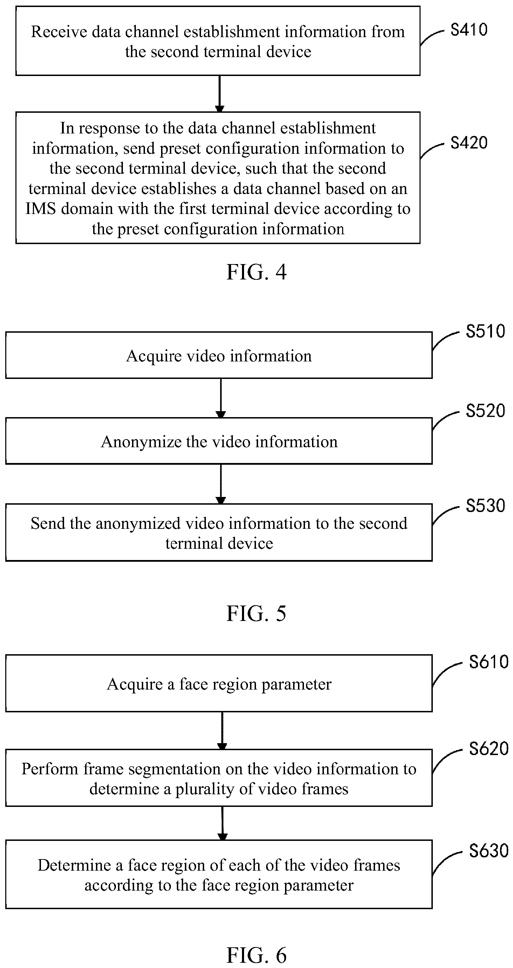

In addition, referring to FIG. 4, in an embodiment, before S110 of FIG. 1 is executed, the method further includes, but not limited to, the following steps S410 to S420.

At S410, data channel establishment information is received from the second terminal device.

At S420, in response to the data channel establishment information, preset configuration information is sent to the second terminal device, such that the second terminal device establishes a data channel based on an IMS domain with the first terminal device according to the preset configuration information.

It can be understood that the first terminal device needs to listen for data channel establishment information, and when receiving the data channel establishment information, sends the configuration information to the second terminal device, to establish an IMS data channel between the first terminal device and the second terminal device.

It should be noted that the configuration information may be set in advance by the user, and the user may update the configuration information according to actual needs.

In practice, the data channel establishment information is first Session Initiation Protocol (SIP) signaling. In the first SIP signaling, a dcmap field in a Session Description Protocol (SDP) message is parsed to determine whether a data channel needs to be established. The configuration information includes a first attribute identifier. A framework of the data channel is determined from the first attribute identifier according to provisions in a network protocol. When the framework of the data channel is a Bootstrap framework, the data channel passes through a preset data server, and the first terminal device, the data server, and the second terminal device are sequentially in communication connection through the data channel. When the framework of the data channel is a non-Bootstrap framework, the data channel does not pass through the data server, and the first terminal device and the second terminal device are in direct communication connection through the data channel.

In addition, referring to FIG. 5, in an embodiment, before S120 of FIG. 1 is executed, the method further includes, but not limited to, the following steps S510 to S530.

At S510, video information is acquired.

At S520, the video information is anonymized.

At S530, the anonymized video information is sent to the second terminal device.

It can be understood that, for conventional technologies where the first terminal device directly sends video information to the second terminal device and the second terminal device can capture a screenshot of the video information to obtain face image information of the user, the face image information may be abused for visual access control, posing a threat to the user's personal safety. In the video call method provided in this embodiment, when the first terminal device needs to perform real-time video communication with the second terminal device after a video call is established between the first terminal device and the second terminal device, the first terminal device acquires video information acquired by an image capturing device in real time, anonymizes the video information, and then sends the anonymized video information to the second terminal device based on a preset audio/video channel. As such, the second terminal device cannot obtain the face image information of the user from the anonymized video information. In this way, leakage of the face image information of the user can be avoided, thereby improving the security.

In addition, referring to FIG. 6, in an embodiment, before S520 of FIG. 5 is executed, the method further includes, but not limited to, the following steps S610 to S630.

At S610, a face region parameter is acquired.

At S620, frame segmentation is performed on the video information to determine a plurality of video frames.

At S630, a face region of each of the video frames is determined according to the face region parameter.

It can be understood that before the anonymizing, regions of each video frame in the video information may be defined based on a face region parameter to determine a face region of the video frame. Because there is no risk of privacy leakage for regions other than the face region in any video frame, only the face region needs to be anonymized in subsequent steps, such that the efficiency can be improved while protecting privacy security.

It should be noted that the video information includes information of a plurality of video frames, and all of the video frames need to be anonymized.

It should be noted that the face region parameter may be preset by the user before the video call, or may be set or adjusted by the user during the video call.

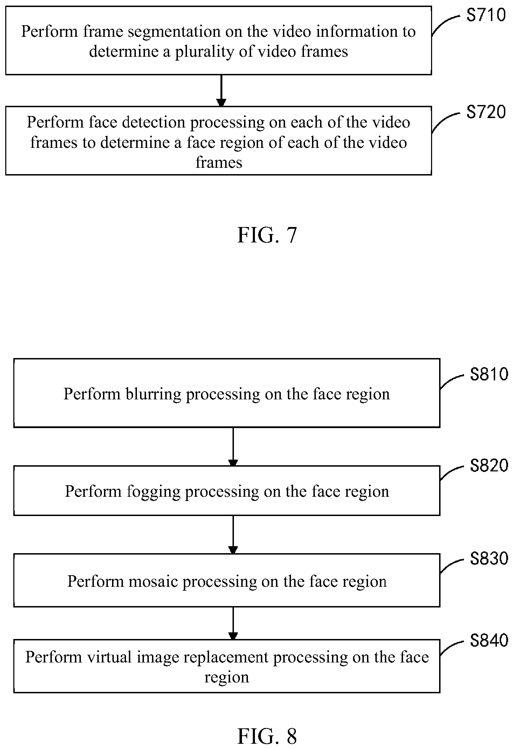

In addition, referring to FIG. 7, in an embodiment, before S520 of FIG. 5 is executed, the method further includes, but not limited to, the following steps S710 to S720.

At S710, frame segmentation is performed on the video information to determine a plurality of video frames.

At S720, face detection processing is performed on each of the video frames to determine a face region of each of the video frames.

It can be understood that before the anonymizing, a face region of each video frame in the video information may be determined through face detection processing. Because there is no risk of privacy leakage for regions other than the face region in any video frame, only the face region needs to be anonymized in subsequent steps, such that the efficiency can be improved while protecting privacy security.

In addition, referring to FIG. 8, in an embodiment, S520 of FIG. 5 includes, but not limited to, any one of the following steps S810 to S840.

At S810, blurring processing is performed on the face region.

At S820, fogging processing is performed on the face region.

At S830, mosaic processing is performed on the face region.

At S840, virtual image replacement processing is performed on the face region.

It can be understood that the face regions are anonymized by one or more of the blurring processing, fogging processing, mosaic processing, and virtual image replacement processing, such that the second terminal device cannot obtain the face image information of the user from the anonymized video information. In this way, leakage of the face image information of the user can be avoided, thereby improving the security.

In addition, in an embodiment, S120 of FIG. 1 includes, but not limited to, a following step:
in response to the face authentication request information, obtaining the face image information from the video frames based on the face regions of the video frames.

It can be understood that during the face authentication process, the first terminal device captures a snapshot of a current video frame in the video information after receiving the face authentication request information, and determines the face image information based on the face region of the video frame. As such, there is no need to use the camera to repeatedly acquire a face image, and the processing efficiency can be improved.

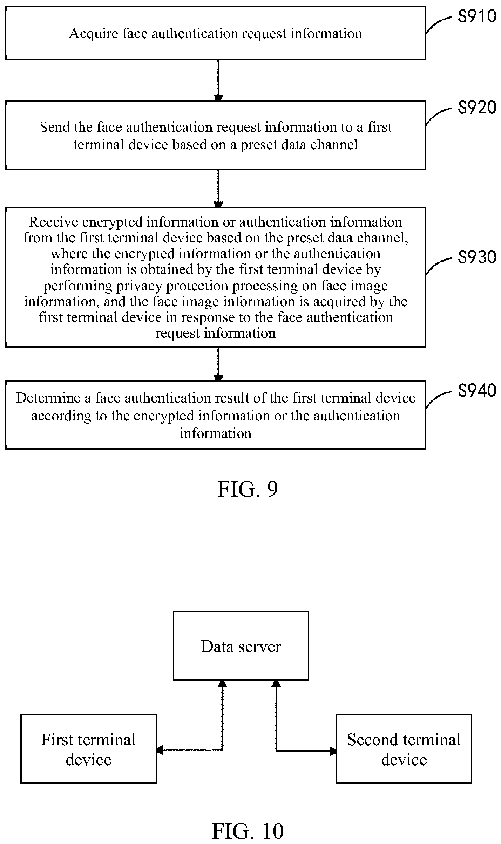

FIG. 9 is a flowchart of a video call method according to another embodiment of the present disclosure. The video call method may be applied to a second terminal device. The video call method includes, but not limited to, the following steps S910 to S940.

At S910, face authentication request information is acquired.

At S920, the face authentication request information is sent to a first terminal device based on a preset data channel.

At S930, encrypted information or authentication information is received from the first terminal device based on the preset data channel, where the encrypted information or the authentication information is obtained by the first terminal device by performing privacy protection processing on face image information, and the face image information is acquired by the first terminal device in response to the face authentication request information.

At S940, a face authentication result of the first terminal device is determined according to the encrypted information or the authentication information.

It can be understood that the embodiment of the video call method applied to a second terminal device is basically the same as the embodiment of the video call method applied to a first terminal device, so the details will not be repeated herein. Based on this, the first terminal device receives face authentication request information from the second terminal device through the data channel, then performs privacy protection processing on the face image information to obtain encrypted information or authentication information, and sends the encrypted information or the authentication information to the second terminal device through the data channel, for the second terminal device to determine a face authentication result of the first terminal device according to the encrypted information or the authentication information. In this way, leakage of face image information of the user can be avoided, thereby improving the security.

FIG. 10 is a schematic diagram of an IMS data channel according to another embodiment of the present disclosure.

It can be understood that the IMS data channel may be a data channel of a Bootstrap framework or a data channel of a non-Bootstrap framework. As shown in FIG. 10, when the framework of the data channel is a Bootstrap framework, the data channel passes through a preset data server, and the first terminal device, the data server, and the second terminal device are sequentially in communication connection through the data channel. In contrast, when the framework of the data channel is a non-Bootstrap framework, the data channel does not pass through the data server, and the first terminal device and the second terminal device are in direct communication connection through the data channel (not shown).

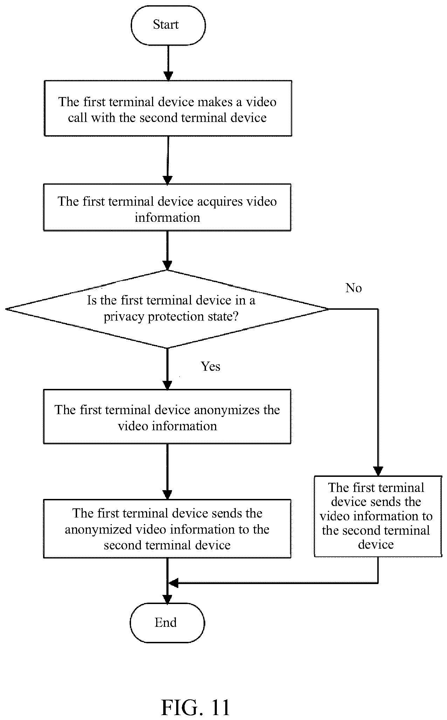

FIG. 11 is a flowchart of a method of sending video information according to an embodiment of the present disclosure.

It can be understood that during the video call, it needs to be determined whether the first terminal device is in a privacy protection state. When the first terminal device is in the privacy protection state, the first terminal device anonymizes the video information, and then sends the anonymized video information to the second terminal device; otherwise, the first terminal device directly transmits the video information to the second terminal device.

It should be noted that when the first terminal device is in a video call with a trusted second terminal device, the video information does not need to be anonymized, and the user may set the first terminal device to a non-privacy protection state, to achieve a better call effect.

In practice, a switch configured for setting a privacy protection status is provided in a call interface of the first terminal device, and the user may adjust the privacy protection status of the first terminal device by triggering the switch.

In addition, in an embodiment, the first terminal device includes, but not limited to, a call module, an acquisition module, a setting module, an image processing module, a monitoring module, a data channel management module, an encryption module, a sending module, and a storage module.

It can be understood that the call module is configured for establishing, maintaining, and hanging up a video call with the second terminal device. The acquisition module is configured for acquiring image information of the user. The setting module is configured for setting the face region parameter and the privacy protection status of the first terminal device. The image processing module is configured for anonymizing the video information. The monitoring module is configured for monitoring whether the face authentication request information or the data channel establishment information is received. The data channel management module is configured for establishing, maintaining, and releasing an IMS data channel. The encryption module is configured for performing encryption processing on the face image information according to a preset encryption rule. The sending module is configured for sending the encrypted information or the authentication information to the second terminal device. The storage module is configured for storing the face image information locally, to facilitate the subsequent authentication processing of the face image information by an authentication server.

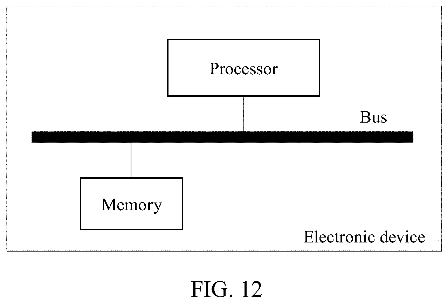

In addition, referring to FIG. 12, an embodiment of the present disclosure provides an electronic device.

In some embodiments, the electronic device includes one or more processors and one or more memories. FIG. 12 uses one processor and one memory as an example. The processor and the memory may be connected by a bus or in other ways. Connection by a bus is used as an example in FIG. 12.

The memory, as a non-transitory computer-readable storage medium, may be configured for storing a non-transitory software program and a non-transitory computer-executable program, for example, the video call method in the embodiments of the present disclosure. The processor executes the non-transitory software program and the non-transitory computer-executable program stored in the memory, to implement the video call method in the embodiments of the present disclosure.

The memory may include a program storage area and a data storage area. The program storage area may store an operating system, and an application required by at least one function. The data storage area may store data and the like required for executing the video call method in the embodiments of the present disclosure. In addition, the memory may include a high-speed random access memory, and may also include a non-transitory memory, e.g., at least one magnetic disk storage device, flash memory device, or other non-transitory solid-state storage device. In some implementations, the memory optionally includes memories located remotely from the processor, and the remote memories may be connected to the electronic device via a network. Examples of the network include, but not limited to, the Internet, an intranet, a local area network, a mobile communication network, and combinations thereof.

The non-transitory software program and the non-transitory computer-executable program required for implementing the video call method in the embodiments of the present disclosure are stored in the memory which, when executed by one or more processors, cause the one or more processors to implement the video call method applied to a first terminal device in the embodiments of the present disclosure, for example, implement the method steps S110 to S140 in FIG. 1, the method step S210 or S220 in FIG. 2, the method steps S310 to S320 in FIG. 3, the method steps S410 to S420 in FIG. 4, the method steps S510 to S530 in FIG. 5, the method steps S610 to S630 in FIG. 6, the method steps S710 to S720 in FIG. 7, or the method steps S810 to S840 in FIG. 8. The first terminal device receives face authentication request information from a second terminal device based on a preset data channel; acquires face image information in response to the face authentication request information; performs privacy protection processing on the face image information to obtain encrypted information or authentication information; and sends the encrypted information or the authentication information to the second terminal device based on the preset data channel, such that the second terminal device determines a face authentication result of the first terminal device according to the encrypted information or the authentication information. Based on this, the first terminal device receives face authentication request information from the second terminal device through the data channel, then performs privacy protection processing on the face image information to obtain encrypted information or authentication information, and sends the encrypted information or the authentication information to the second terminal device through the data channel, for the second terminal device to determine a face authentication result of the first terminal device according to the encrypted information or the authentication information. In this way, leakage of face image information of the user can be avoided, thereby improving the security.

In addition, an embodiment of the present disclosure provides a computer-readable storage medium, storing a computer-executable instruction which, when executed by a processor or controller, for example, by a processor in the electronic device embodiment described above, may cause the processor to implement the video call method applied to a first terminal device in the foregoing embodiments, for example, implement the method steps S110 to S140 in FIG. 1, the method step S210 or S220 in FIG. 2, the method steps S310 to S320 in FIG. 3, the method steps S410 to S420 in FIG. 4, the method steps S510 to S530 in FIG. 5, the method steps S610 to S630 in FIG. 6, the method steps S710 to S720 in FIG. 7, or the method steps S810 to S840 in FIG. 8. The first terminal device receives face authentication request information from a second terminal device based on a preset data channel; acquires face image information in response to the face authentication request information; performs privacy protection processing on the face image information to obtain encrypted information or authentication information; and sends the encrypted information or the authentication information to the second terminal device based on the preset data channel, such that the second terminal device determines a face authentication result of the first terminal device according to the encrypted information or the authentication information. Alternatively, the computer-executable instruction, when executed by the processor, may cause the processor to implement the video call method applied to a second terminal device in the foregoing embodiments, for example, implement the method steps S910 to S940 in FIG. 9. The second terminal device acquires face authentication request information; sends the face authentication request information to a first terminal device based on a preset data channel; receives encrypted information or authentication information from the first terminal device based on the preset data channel, where the encrypted information or the authentication information is obtained by the first terminal device by performing privacy protection processing on face image information, and the face image information is acquired by the first terminal device in response to the face authentication request information; and determines a face authentication result of the first terminal device according to the encrypted information or the authentication information. Based on this, the first terminal device receives face authentication request information from the second terminal device through the data channel, then performs privacy protection processing on the face image information to obtain encrypted information or authentication information, and sends the encrypted information or the authentication information to the second terminal device through the data channel, for the second terminal device to determine a face authentication result of the first terminal device according to the encrypted information or the authentication information. In this way, leakage of face image information of the user can be avoided, thereby improving the security.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. **In** addition, as is known to those having ordinary skills in the art, the communication medium typically includes computer-readable instructions, data structures, program modules, or other data in a modulated data signal such as a carrier or other transport mechanism, and can include any information delivery medium.

Although some embodiments of the present disclosure have been described above, the present disclosure is not limited to the embodiments described above. Those having ordinary skills in the art can make various equivalent modifications or replacements without departing from the essence of the present disclosure. Such equivalent modifications or replacements fall within the scope defined by the claims of the present disclosure.

## Claims

1. A video call method, applied to a first terminal device, the method comprising:
establishing, by the first terminal device, a video call with a second terminal device;
receiving face authentication request information from the second terminal device based on a preset data channel;
acquiring face image information in response to the face authentication request information;
performing privacy protection processing on the face image information to obtain encrypted information or authentication information; and
sending the encrypted information or the authentication information to the second terminal device based on the preset data channel, such that the second terminal device determines a face authentication result of the first terminal device according to the encrypted information or the authentication information.

2. The method of claim 1, wherein performing privacy protection processing on the face image information to obtain encrypted information or authentication information comprises:
performing encryption processing on the face image information according to a preset encryption rule to obtain the encrypted information; or
performing authentication processing on the face image information according to a preset authentication database to obtain the authentication information.

3. The method of claim 1 or 2, wherein in response to performing the privacy protection processing on the face image information to obtain the authentication information, the privacy protection processing comprises:
sending the face image information to a preset authentication server, such that the authentication server performs authentication processing on the face image information; and
receiving the authentication information from the authentication server.

4. The method of claim 1, wherein before receiving face authentication request information from the second terminal device based on a preset data channel, the method further comprises:
receiving data channel establishment information from the second terminal device; and
in response to the data channel establishment information, sending preset configuration information to the second terminal device, such that the second terminal device establishes a data channel based on an Internet Protocol Multimedia Subsystem (IMS) domain with the first terminal device according to the preset configuration information.

5. The method of claim 1, wherein before acquiring face image information in response to the face authentication request information, the method further comprises:
acquiring video information;
anonymizing the video information; and
sending the anonymized video information to the second terminal device.

6. The method of claim 5, wherein before anonymizing the video information, the method further comprises:
acquiring a face region parameter;
performing frame segmentation on the video information to determine a plurality of video frames; and
determining a face region of each of the video frames according to the face region parameter.

7. The method of claim 5, wherein before anonymizing the video information, the method further comprises:
performing frame segmentation on the video information to determine a plurality of video frames; and
performing face detection processing on each of the video frames to determine a face region of each of the video frames.

8. The method of claim 6 or 7, wherein the anonymizing comprises one of:
performing blurring processing on the face region;
performing fogging processing on the face region;
performing mosaic processing on the face region; or
performing virtual image replacement processing on the face region.

9. The method of claim 6 or 7, wherein acquiring face image information in response to the face authentication request information further comprises:
in response to the face authentication request information, obtaining the face image information from the video frames based on the face region of each of the video frames.

10. A video call method, applied to a second terminal device, the method comprising:
acquiring face authentication request information;
sending the face authentication request information to a first terminal device based on a preset data channel;
receiving encrypted information or authentication information from the first terminal device based on the preset data channel, wherein the encrypted information or the authentication information is obtained by the first terminal device by performing privacy protection processing on face image information, and the face image information is acquired by the first terminal device in response to the face authentication request information; and
determining a face authentication result of the first terminal device according to the encrypted information or the authentication information.

11. An electronic device, comprising: a memory, a processor, and a computer program stored in the memory and executable by the processor, wherein the computer program, when executed by the processor, causes the processor to perform the video call method of any one of claims 1 to 9 or the video call method of claim 10.

12. A computer-readable storage medium, storing a computer-executable program which, when executed by a processor, causes the processor to perform the video call method of any one of claims 1 to 9 or the video call method of claim 10.
